# EUROPEAN PATENT APPLICATION

(11) **EP 2 009 770 A2**
(43) Date of publication of application: **31.12.2008**
(21) Application number: 08158796.6
(22) Date of filing: 23.06.2008
(51) Int. Cl.: H02K 5/22

(54) **High speed generator rotor field coil lead retention system**

(30) Priority: 25.06.2007 US 767645
(71) Applicant: Honeywell International Inc., Morristown NJ 07960 (US)
(72) Inventor: Waddell, Simon L., Tucson, AZ 85737 (US); McDowall, Gregor, Phoenix, AZ 85048 (US)
(74) Representative: Buckley, Guy Julian

(57) **Abstract**

A high speed aircraft generator utilizes a resistor bobbin to constrain field leads from radial displacement during operation of the generator. The resistor bobbin is provided with passages through which the field leads are passed. The passages are parallel to an axis of the generator. The resistor bobbin thus serves two purposes in the generator; its normal function of supporting a resistor coil and a second function of constraining field leads. The field leads have a round cross-sectional configuration. The field leads are attached to flat conductors of a field coil with a unique brazing clip.

## Description

### BACKGROUND OF THE INVENTION

The present invention is in the field of electrical generators and, more particularly, electrical generators operating at very high rotational speeds.

In certain applications of generators such as those employed in aircraft, there is a requirement to produce a high power density with a generator that is small in size and light in weight. In these applications, a desired high power density may be achieved with relatively small generators which operate at very high rotational speeds. A typical aircraft generator may operate at rotational speeds of 12,000 to 24,000 rpm.

When a generator is operated at such high rotational speeds, rotatable components of the generator may be subjected to correspondingly high centrifugal forces. Some rotatable components may be particularly vulnerable to damage from centrifugal forces. Examples of these vulnerable components are electrical leads that are external to field coils of the generators.

In a typical aircraft high-speed generator, a field coil is interconnected with rectifier diodes using leads that are external to the field coil. In prior art constructions of such generators, these external leads may be secured to a shaft that extends from the field coil. When the leads are secured, with an epoxy- coated tape wrap, to the shaft, the leads may be constrained from radial displacement when the shaft and field coil are rotated.

This prior art method of lead constraint has limited capability. The epoxy- coated tape wrap must have sufficient strength to resist being destroyed by high centrifugal forces. Consequently, prior art generators have employed massive epoxy-coated tape wraps to constrain external leads. These prior art tape wraps are disadvantageous from at least two points of view. First of all, tape wraps which are strong enough to resist 24,000 rpm centrifugal forces are undesirably heavy and therefore adversely contribute to the weight of an aircraft generator. Secondly, fabrication of a generator with epoxy- coated tape wrap requires a number of cumbersome and expensive manufacturing steps. Typically, tape must be wrapped around the leads and the shaft in an expensive manual operation. Also an epoxy coating step must be performed after the tape is in place. These steps are costly and they may contribute to product defects if the steps are not performed correctly.

In an alternate prior art construction these leads may be embedded in axially-oriented grooves cut in a shaft that extends from the field coil. The leads may be sleeved in insulating material and embedded in epoxy. These prior art grooves are disadvantageous from several points of view. First of all, the grooves may reduce the shaft stiffness with a consequent detrimental effect on rotor dynamics. Secondly fabrication of a generator with epoxy embedded grooves may require expensive additional machining and a molding step after the leads are in place.

In such a prior-art generator, a bobbin may be used to interconnect the field coil to diodes. This prior-art bobbin may consist of a body using castellations for alignment to an exciter, a wound resistor and a set of bus rings for interconnection. This prior-art bobbin may be disadvantageous in several ways. Firstly the bobbin may not provide for any mechanical support for diode leads to resist centrifugal forces. Secondly the wound resistor may use expensive bus rings for interconnection of the diode leads to the two flat wire field leads. This may add considerable cost and complexity. Finally, the wound resistor may be located inside the bobbin leaving no radial room for the field leads to route axially through the bobbin. This means that flat wire in a grooved shaft may be required for the interconnection of the field winding to the diodes.

In the field of high-speed generators it is desirable to construct field coils from tightly wound flat conductors. In the prior art, an end portion of the flat conductor was utilized to make electrical interconnection between the field coil and other components of the generator. Construction of such prior-art generators required introduction of a multiple bends in the flat conductor. These bends are required because portions of a flat conductor used for interconnection purposes required a planar orientation parallel to an axis of rotation of the generator. Conversely, portions of the flat conductor that comprised the wound field coil required a planar orientation that was circumferential to the axis of rotation of the generator. Introducing bends in a flat conductor is a cumbersome task. Typically, it must be performed manually by experienced craftsmen so as not to introduce potential defects in the generator.

As can be seen, it would be desirable to construct a high-speed generator in which vulnerable rotatable components are restrained from radial displacement without use of massive and expensive epoxy- coated tape wraps. Additionally, it would be desirable to provide a method for constructing such generators without using portions of flat field coil conductors as electrical interconnection elements outside the field coil.

### SUMMARY OF THE INVENTION

In one aspect of the present invention a generator comprises a field coil, a shaft extending axially from the field coil, field leads extending axially from the field coil and an annular member positioned on the shaft which constrains the field leads from moving radially during rotation of the field coil without employing an epoxy- coated tape wrap.

In another aspect of the present invention a generator comprises a field coil wound from flat conductor and round field leads. Electrical interconnection between the flat conductor and the round field lead is made on a brazing clip.

In still another aspect of the present invention a method for producing electrical current with a high-speed electrical generator comprises the steps of constraining field leads in a resistor bobbin positioned on a shaft of the generator; and rotating the resistor bobbin with the shaft whereby the field leads are constrained from radial displacement during the rotation.

These and other features, aspects and advantages of the present invention will become better understood with reference to the following drawings, description and claims.

### BRIEF DESCRIPTION OF THE DRAWINGS

Figure 1 is partial cross sectional view of a generator constructed in accordance with the invention;

Figure 2 is a perspective view of a brazing clip in accordance with the invention;

Figure 3 is a partial perspective view of a generator constructed in accordance with the invention;

Figure 4 is a perspective view of a resistor bobbin in accordance with the invention;

Figure 5 is a partial perspective view of a generator constructed in accordance with the invention;

Figure 6 is a flow chart of a method of constructing a generator in accordance with the present invention; and

Figure 7 is a flow chart of a method of operating a generator in accordance with the present invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Broadly, the present invention may be useful in improving high-speed electrical generators. More particularly, the present invention may provide a simple expedient to constrain rotatable components such as electrical leads from radial displacement and damage resulting from centrifugal forces. The present invention may be particularly useful in aircraft generators which operate at high rotational speeds of up to about 24,000 rpm.

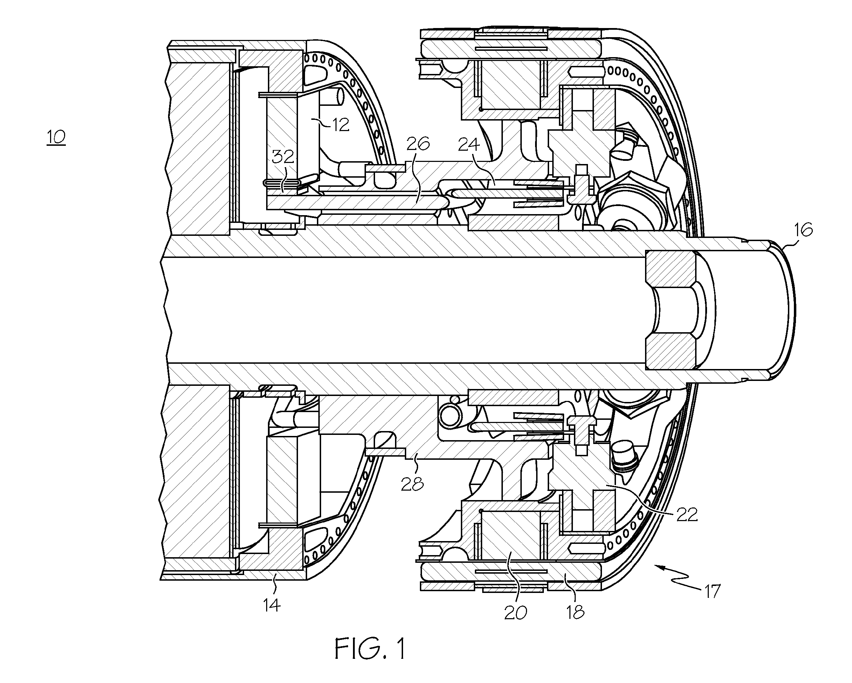

In contrast to prior-art generators, among other things, the present invention may provide a generator that is constructed without epoxy- coated wraps or grooved shaft for constraint of electrical leads. The present invention may, instead of epoxy coated wraps or grooved shaft, use a unique resistor bobbin that may be provided with passages in which field leads are radially constrained. The present invention may also incorporate a unique transition device or brazing clip that expediently provides for use of round field leads in a generator. These desirable improvements of a high-speed generator may be achieved by constructing a generator in an inventive configuration illustrated in Figure 1.

Referring now to Figure 1, a generator designated generally by the numeral 10 may be comprised of a field coil 12 which may be assembled in a rotor 14 adapted for rotation on a shaft 16. An exciter assembly 17 may comprise an exciter coil 18 which may be assembled on a laminated core 20 and may be interconnected with one or more diodes 22. The exciter coil 18 and the field coil 12 may be electrically interconnected. In the generator 10 illustrated in Figure 1, the exciter coil 18 may be interconnected to the diodes 22. Diode leads 24 may be interconnected with field leads 26 which may be interconnected with the field coil 12. The field leads 26 may pass through an annular member such as a resistor bobbin 28

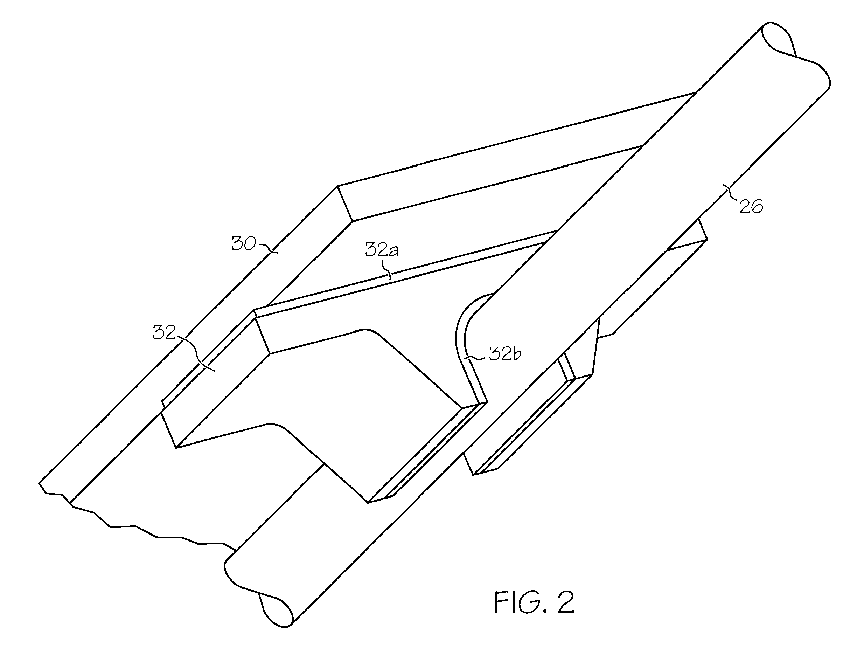

The field coil 12 may be comprised of a tightly wound conductor 30 which may have a generally flat configuration such as that illustrated in Figure 2. The field lead 26 may have a generally round cross-sectional configuration as illustrated in Figure 2. The flat conductor 30 may be interconnected with the field leads 26 with a uniquely shaped brazing clip 32. The brazing clip 32 may have a generally planar brazing surface 32a and a partially cylindrical brazing surface 32b. It may be seen that the flat conductor 30 may be brazed to the planar brazing surface 32a. The field lead 26 may be brazed onto the partially cylindrical brazing surface 32b.

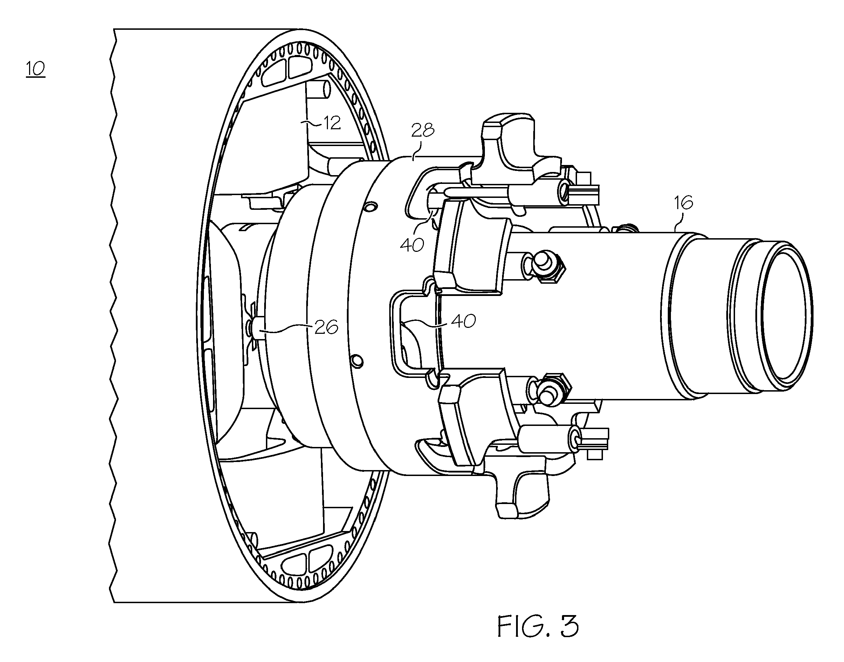

Referring now to Figure 3, it can be seen that the field leads 26 may pass through passages 40 in the resistor bobbin 28. As the shaft 16 rotates, the bobbin 28 may rotate with it. The bobbin 28 may be comprised of a light weight material such as polyamide-imide plastic or glass fiber reinforced plastic. The field leads 26 are constrained within the passages 40 during rotation of the generator 10. Consequently, the field leads 26 may be constrained from radial displacement during such rotation.

In a typical prior-art high speed generator, a resistor bobbin is positioned between a field coil and an exciter coil. In the present invention, the resistor bobbin 28 uniquely serves a dual purpose. The resistor bobbin 28 performs its prior art role of supporting a resistor coil, but it serves an additional purpose of radially constraining the field leads 26 during high speed rotation of the generator 10. Thus the inventive resistor bobbin 28 may replace a massive coated tape constraining system of the prior art with the simple expedient of utilizing the resistor bobbin 28 for a dual purpose. This expedient may allow for radial constraint of the field leads 26 without introduction of any additional mass into the generator 10. This configuration allows the field leads 26 to be routed axially and positively constrained without compromising the stiffness and balance of the shaft 16 with shaft grooves.

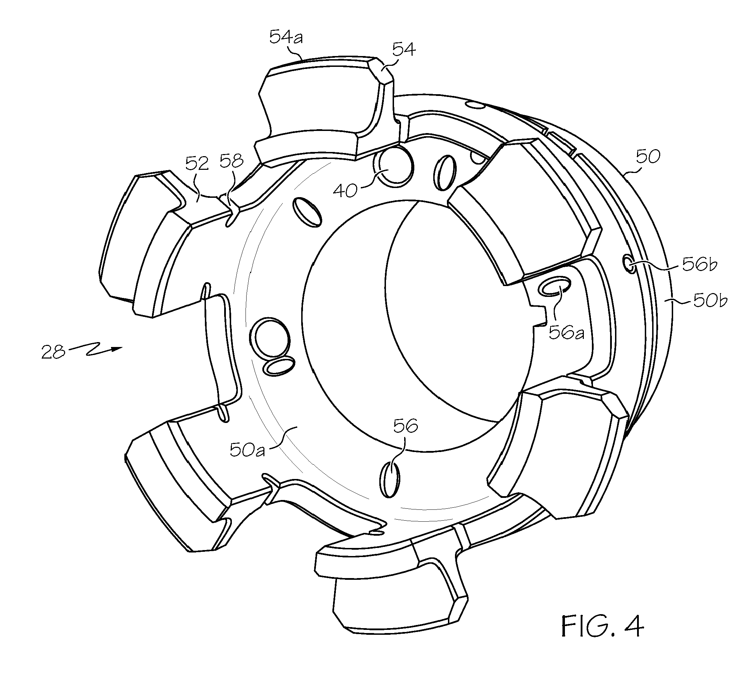

Referring now to Figure 4, the resistor bobbin 28 may be seen in a perspective view. The resistor bobbin 28 comprises an annular body 50 through which the passages 40 may extend. Castellations 52 may be formed around an outer circumference of the body 50. The castellations 52 may be formed with an orientation that is generally parallel to the shaft 16 of Figure 3. Tabs 54 may be formed on the castellations 52. Outer surfaces 54a of the tabs 54 may be formed so that they have a generally circumferential shape. The surfaces 54a may be formed with an outer diametrical dimension that is close in size to an inner diametrical dimension of the laminated core 20 of Figure 1. The outer diametrical dimension of the surfaces 54a may be about 0.002 inch to about 0.005 inch less than the inner diametrical dimension of the laminated core 20.

During high speed rotation of the generator 10, the tabs 54 may be forced into contact with the laminated core 20 along their respective outer surfaces 54a. The laminated core 20 may be a metallic annular member. The laminated core 20 may be thus resistant to radial expansion during rapid rotation.. Because the outer diametrical dimension of the surfaces 54a may be only slightly smaller than the inner diametrical dimension of the laminated core 20, there may be only a very small radial expansion of the resistor bobbin 28. Thus the bobbin 28 may be constructed from a relatively light weight material such as the plastics described hereinabove. It may be seen that the castellations 52 and the tabs 54 of the bobbin 28 may facilitate its radial constraint functionality while permitting its mass to be desirably low.

By continued reference to Figure 4 there is shown an additional feature of the bobbin 28. The annular body 50 may be provided with lacing passages 56. These lacing passages 56 may be formed so that a first end 56a may open along a planar surface 50a of the body 50. A second end 56b of the lacing passage 56 may open on a circumferential surface 50b of the body 50. The castellations 52 may be provided with lacing grooves 58.

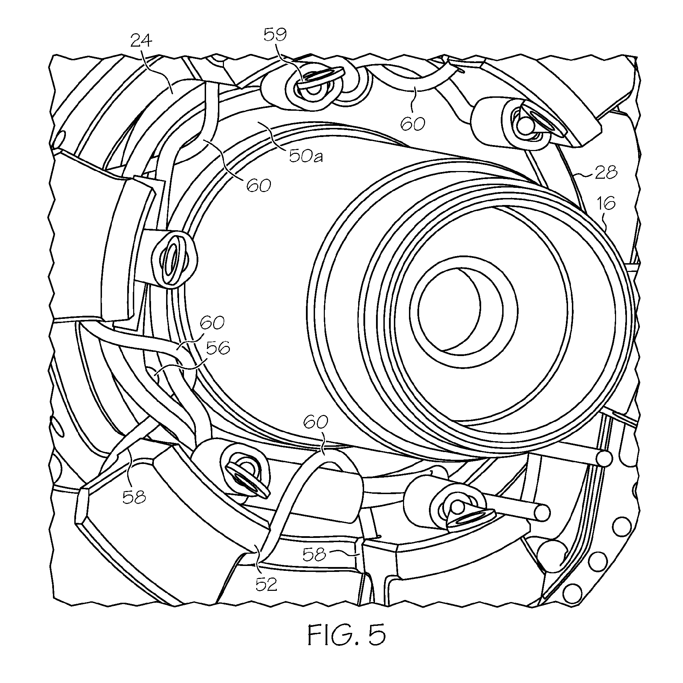

By referring to Figure 5, the utility of the lacing passages 56 and the lacing grooves 58 may be seen. Each of the field leads 26 is interconnected with one or more of the diode leads 24 at the planar surface 50a of the resistor bobbin 28 at interconnection points 59. In one useful configuration, known as a full wave bridge configuration, three of the diode leads 24 may be interconnected with each of the field leads 26. In an alternate configuration, known as a half-wave bridge, all of the diode leads 24 may be attached to only one of the field leads 26. Lacing 60 is threaded into and between the lacing grooves 58 and the lacing passages 56. The lacing 60 engages with and secures the diode leads 24 to the planar surface 50a of the body 50 of the bobbin 28. The lacing 60 precludes circumferential movement of the diode leads 24 during acceleration of the generator as it starts and stops or otherwise changes its rotational speed.

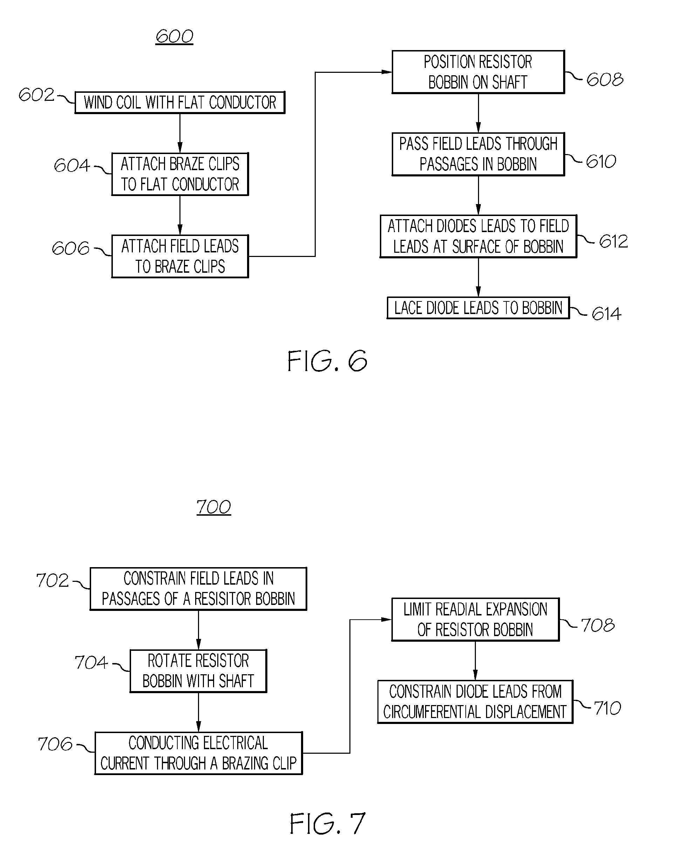

In one embodiment of the present invention, a method is provided for constructing a high speed generator (e.g. the generator 10). In that regard the method may be understood by referring to Figure 6. In Figure 6, a flow chart portrays various aspects of an inventive method 600. In a step 602 a conductor (e.g. the flat conductor 30) may be wound into field coils (e.g. the field coils 12). In a step 604 clips (e.g. the braze clips 32) may be attached to the conductors. In a step 606 field leads having a round cross-sectional configuration (e.g. the field leads 26) may be attached to the clips. In a step 608 a resistor bobbin (e.g. the resistor bobbin 28) may be positioned on a shaft (e.g. the shaft 16) of the generator. In a step 610 field leads are passed through passages (e.g. the passages 40) of the resistor bobbin. The field leads (e.g., field leads 26) may be thus radially constrained within the passages (e.g., passages 40) during rotation of the generator. In a step 612 diode leads (e.g. the diode leads 24) may be attached to the field leads. In a step 614 the diode leads may be laced to the resistor bobbin.

In another embodiment of the present invention, a method is provided for producing electrical current with a high speed generator (e.g. the generator 10). In that regard the method may be understood by referring to Figure 7. In Figure 7, a flow chart portrays various aspects of an inventive method 700. In a step 702 passages (e.g. the passages 40) of a resistor bobbin (e.g. the resistor bobbin 28) may constrain field leads (e.g. the field leads 26). In a step 704 the resistor bobbin may be rotated with a shaft (e.g. the shaft 16) of the generator. In a step 706 electrical current may be conducted between a field coil (e.g. the field coil 12) and an exciter assembly (e.g. the exciter assembly 17) through a brazing clip (e.g. the brazing clip 32), whereby a round conductor may function as the field lead. In a step 708 radial expansion of the resistor bobbin may be limited by engagement between tabs (e.g. the tabs 54) of the resistor bobbin and a metallic annular member (e.g. the laminated core 20) during operation of the generator. In a step 710 diode leads (e.g. the diode leads 24) may be constrained from circumferential displacement during changes in rotational speed of the generator. The step 710 may be facilitated by use of lacing (e.g. the lacing 60) to bind the diode leads to the resistor bobbin. Thus when the steps of the method 700 are practiced, the generator may operate at high rotational speeds, i.e. about 24,000 rpm, without damage to either the field leads or the diode leads.

It should be understood, of course, that the foregoing relates to exemplary embodiments of the invention and that modifications may be made without departing from the spirit and scope of the invention as set forth in the following claims.

## Claims

1. A generator (10) comprising:
a field coil (12);
a shaft (16) extending axially from the field coil (12);
field leads (26) extending axially from the field coil (12); and
an annular member (28) positioned on the shaft (16), which constrains the field leads (26) from moving radially during rotation of the field coil (12) without employing an epoxy-embedded tape wrap.

2. The generator (10) of claim 1 wherein the annular member (28) comprises a resistor bobbin (28) having passages (40) through which the field leads (26) pass.

3. The generator (10) of any one or more of claims 1-2 further comprising:
an annular metallic member (20); and
wherein outer surfaces (54a) of the annular member (28) engage with the annular metallic member (20) during operation of the generator (10), whereby the annular member (28) is constrained from radially expanding.

4. The generator (10) of any one or more of claims 1-3 wherein:
the annular member (28) is comprised of plastic; and
the annular metallic member (20) is a laminated core of an exciter assembly (17).

5. The generator (10) of any one or more of claims 1-4 further comprising:
castellations (52) formed on the annular member (28); and
tabs (54) formed on the castellations, which tabs have outer surfaces (54a) that engage with the annular metallic member (20).

6. The generator (10) of claim 5 wherein;
an outer diametric dimension of the outer surfaces (54a) of the tabs (54) is less than an inner diametrical dimension of the annular metallic member (20); and
the outer diametrical dimension of the tabs (54) is about 0.002 inch to about 0.005 inch less than the inner diametrical dimension of the annular metallic member (20).
